**Europäisches Patentamt**

**European Patent Office**

**Office européen des brevets**

(19)

(11) Numéro de publication: **0 180 495**
**B1**

(12)

# FASCICULE DE BREVET EUROPEEN

(45) Date de publication du fascicule du brevet:
**27.01.88**

(51) Int. Cl.⁴: **B 01 D 33/00**

(21) Numéro de dépôt: **85401893.4**

(22) Date de dépôt: **27.09.85**

(54) Procédé et appareil pour la filtration d'une suspension sur couche filtrante granulaire.

(30) Priorité: **29.10.84 FR 8416491**

(43) Date de publication de la demande:
**07.05.86 Bulletin 86/19**

(45) Mention de la délivrance du brevet:
**27.01.88 Bulletin 88/4**

(84) Etats contractants désignés:
**BE CH DE GB IT LI**

(56) Documents cités:
**DE - A - 2 708 340**
**DE - C - 593 364**
**FR - A - 445 352**
**FR - A - 1 298 337**
**US - A - 3 151 187**

(73) Titulaire: **"DEGREMONT" Société dite:, 183, Avenue du 18 Juin 1940, F-92508 Rueil-Malmaison Cédex (FR)**

(72) Inventeur: **Berne, François, 31, rue des Bons Raisins, F-92150 Suresnes (FR)**

(74) Mandataire: **Armengaud, Charles, Cabinet ARMENGAUD AINE 3, Avenue Bugeaud, F-75116 Paris (FR)**

ACTORUM AG

# Description

L'invention concerne un procédé pour la filtration d'une suspension sur couche filtrante granulaire et un appareil pour la mise en œuvre de ce procédé, du type des appareils de filtration continue sur sable, utilisables en traitement des eaux de toute nature pour la filtration de suspensions ou d'émulsions.

Les filtres à couche filtrante granulaire s'encrassent après un certain temps de fonctionnement et nécessitent une régénération de la masse filtrante. Il est connu depuis longtemps, pour éviter l'arrêt de l'alimentation du filtre en fluide à filtrer pendant la régénération de la masse filtrante, et donc pour assurer un fonctionnement continu du filtre, de soumettre la masse filtrante à un écoulement, de telle manière que, tout en maintenant constant le débit du fluide à filtrer, on puisse, par circulation, nettoyer la masse filtrante encrassée.

Plusieurs appareils ont déjà été décrits (voir les documents F-A-445 352 et DE-A-2 708 340) pour la mise en œuvre de ce type de procédé: la filtration est effectuée à courant ascendant à travers une masse granulaire de sable, le sable encrassé est extrait à contre-courant au moyen d'un éjecteur à air ou à eau, participant également à la régénération.

La reprise du sable est habituellement continue: dans certains procédés, le lavage du sable est effectué à l'extérieur du filtre; des portions de sable sont extraites, régénérées et recyclées sans interruption de la marche du filtre. Ces appareils nécessitent un équipement complexe et coûteux.

Dans d'autres procédés connus (document DE-2 708 340), on réalise un lavage du sable à l'air comprimé, un éjecteur à air, disposé dans la partie centrale du filtre, permettant à la fois la reprise du sable par un tube central et son lavage à l'air dans ce tube central, le sable étant soumis à un lavage à l'eau à la partie supérieure du filtre.

Cependant, ces procédés présentent des inconvénients: la vitesse de passage du sable dans le tube étant souvent trop grande, des poches d'air se forment et ne participent pas au lavage du sable; en outre, les risques d'abrasion sont importants, de même que les pertes de sable par attrition. La consommation d'air comprimé est continue; de plus, la mise en œuvre de ces procédés nécessite des appareils cylindriques de grande hauteur, munis de dispositifs annexes tels que cônes de dispersion pour le sable lavé.

L'invention permet d'éliminer ces inconvénients. Elle permet en outre d'adapter le volume de sable au niveau de colmatage du filtre, et donc de régler les cycles de transfert du sable et d'optimiser la consommation d'air comprimé.

Le procédé suivant l'invention, pour la filtration d'une suspension aqueuse sur couche filtrante granulaire, dans lequel le fluide à traiter traverse la masse granulaire suivant un courant vertical ascendant, cette masse granulaire étant, en vue de son lavage à l'air et à l'eau, entraînée en continu au moyen d'un éjecteur à air surpressé, dans un tube où elle prend un mouvement ascendant et à la sortie duquel elle est lavée à l'eau au-dessus de la couche où s'effectue la filtration, après quoi elle est recyclée par gravité à la partie supérieure de la couche de filtration, est caractérisé en ce que la masse granulaire chargée ayant subi ce premier lavage est fluidisée par l'air surpressé au-dessus de la couche filtrante et soumise à un lavage complémentaire à l'eau et à l'air surpressé.

Suivant l'invention, l'air surpressé de fluidisation et de lavage complémentaire de la masse granulaire est sous une pression de 0,1 à 0,4 bar, l'air comprimé de reprise de la masse granulaire étant sous une pression de 3 à 4 bars.

Suivant une disposition préférée de l'invention, les alimentations de l'appareil en air surpressé et en air comprimé sont intermittentes, et avantageusement synchrones.

L'invention concerne également un appareil pour la mise en œuvre du procédé. Cet appareil de filtration, constitué par une enceinte fermée, cylindro-conique, comportant une zone de filtration sur couche filtrante granulaire, des moyens pour introduire le fluide à traiter dans la partie inférieure de cette couche filtrante, des moyens pour la reprise de l'eau filtrée à la partie supérieure de l'appareil, et une zone de lavage, située au-dessus de la zone de filtration et dans laquelle débouche un tube axial alimenté à sa base en air comprimé, destiné à entraîner la masse filtrante chargée vers la zone de lavage, des moyens pour évacuer l'eau de lavage de cette zone, est caractérisé en ce qu'il est muni d'un distributeur d'air surpressé, disposé au-dessus de la couche filtrante.

Suivant une autre caractéristique de l'invention, des moyens sont prévus pour alimenter le collecteur d'air surpressé, de façon continue ou intermittente, avantageusement en synchronisme avec l'alimentation en air comprimé du tube axial assurant la reprise de la masse filtrante chargée.

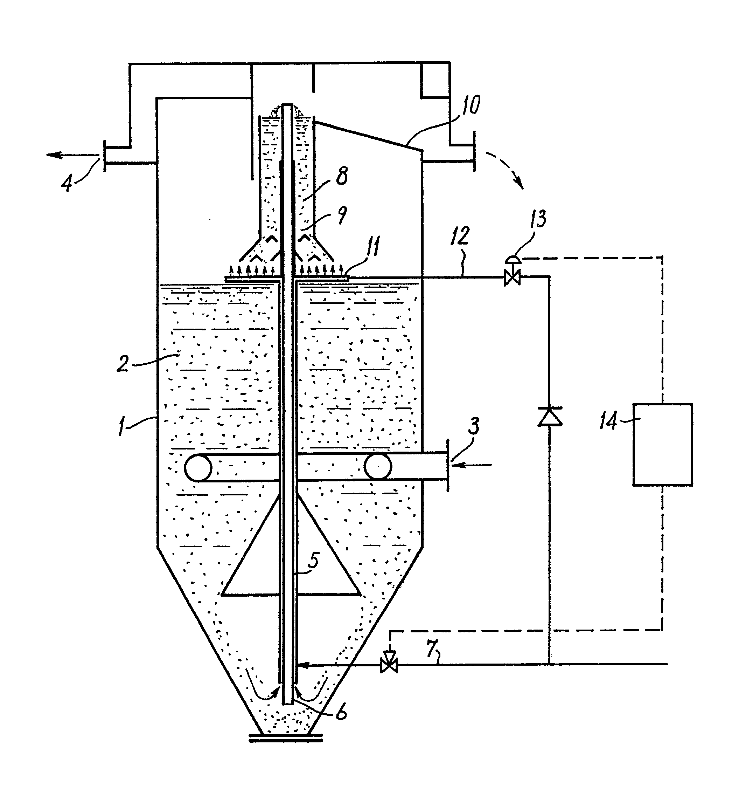

On a décrit ci-après, uniquement à titre d'exemple non limitatif, une forme de réalisation de l'appareil suivant l'invention, en référence à la figure unique du dessin annexé, qui montre de façon schématique et en coupe cet appareil.

L'appareil est constitué d'une enceinte cylindro-conique 1 comportant une zone de filtration 2 emplie d'un matériau granulaire tel que du sable. L'eau à traiter est introduite par le collecteur 3 et traverse la couche filtrante de bas en haut. L'eau filtrée est recueillie par le déversoir 4. La masse filtrante chargée est aspirée dans le tube central 5 au moyen d'un éjecteur d'air comprimé 6, alimenté par la canalisation 7, sous 3 à 4 bars. De cette façon, l'air comprimé entraîne le sable vers la zone de lavage 8. Le sable lavé est recyclé par la cheminée 9 vers la couche filtrante, l'eau de lavage étant évacuée par le déversoir 10.

Conformément à l'invention, un collecteur d'air surpressé 11, sous 0,1 à 0,4 bar, est disposé au-dessus de la couche filtrante et au-dessous de la cheminée 9, cet air surpressé assurant la fluidisation du sable retombant de la cheminée après un premier lavage assurant, en outre, un lavage complémentaire en air et eau de ce sable.

Le collecteur 11 d'air surpressé est alimenté par la canalisation 12 reliée à la canalisation 7 d'alimentation en air comprimé de l'éjecteur 6 et munie de moyens, tels que détendeur et vanne de réglage de débit 13, pour assurer le fonctionnement intermittent et avantageusement synchrone de l'éjecteur 6 et du collecteur 11. L'appareil comporte en outre des moyens de régulation tels que minuterie 14, permettant de régler les cycles de lavage en fonction du colmatage de la couche filtrante.

## Revendications

1. Procédé pour la filtration d'une suspension aqueuse sur couche filtrante granulaire, dans lequel le fluide à traiter traverse la masse granulaire suivant un courant vertical ascendant, cette masse granulaire étant, en vue de son lavage à l'air et à l'eau, entraînée en continu, au moyen d'un éjecteur à air surpressé, dans un tube où elle prend un mouvement ascendant et à la sortie duquel elle est lavée à l'eau au-dessus de la couche où s'effectue la filtration, après quoi elle est recyclée par gravité à la partie supérieure de la couche de filtration, caractérisé en ce que la masse granulaire chargée ayant subi ce premier lavage est fluidisée par l'air surpressé au-dessus de la couche filtrante et soumise à un lavage complémentaire à l'eau et à l'air surpressé.

2. Procédé suivant la revendication 1, caractérisé en ce que l'air surpressé de fluidisation et de lavage complémentaire de la masse granulaire est sous une pression de 0,1 à 0,4 bar.

3. Procédé suivant l'une quelconque des revendications précédentes, caractérisé en ce que le premier lavage et le lavage complémentaire de la masse granulaire chargée sont réalisés de façon intermittente et en synchronisme.

4. Appareil pour la mise en œuvre du procédé suivant l'une quelconque des revendications précédentes, comportant, dans une enceinte fermée (1) de forme cylindro-conique, une zone de filtration sur couche filtrante granulaire (2), des moyens (3) pour introduire le fluide à traiter dans la partie inférieure de cette couche filtrante, des moyens (4) pour la reprise de l'eau filtrée à la partie supérieure de l'appareil, et une zone de lavage (8) située au-dessus de la zone de filtration et dans laquelle débouche un tube axial (5), alimenté à sa base en air comprimé, destiné à entraîner la masse filtrante chargée vers la zone de lavage, des moyens (10) pour évacuer l'eau de lavage de cette zone, ledit appareil étant caractérisé en ce qu'il est muni d'un distributeur d'air surpressé (11), disposé au-dessus de la couche filtrante granulaire (2).

5. Appareil suivant la revendication 4, caractérisé en ce qu'il comporte un détendeur et une vanne de réglage de débit (13) pour alimenter le collecteur (11) d'air surpressé, de façon continue ou intermittente, avantageusement en synchronisme avec l'alimentation en air comprimé de l'éjecteur (6) assurant, par le moyen du tube axial (5), la reprise de la masse filtrante chargée.

6. Appareil suivant l'une quelconque des revendications 4 et 5, caractérisé en ce qu'il comporte une minuterie (14) destinée au réglage des cycles de lavage, en fonction du colmatage de la couche filtrante.

## Patentansprüche

1. Verfahren zum Filtrieren einer wässerigen Suspension auf einer körnigen Filtrierschicht, bei welchem das zu behandelnde Fluid die körnige Masse längs eines vertikal aufsteigenden Stroms durchquert und die körnige Masse zum Zwecke des Waschens in Luft und Wasser kontinuierlich mittels eines Druckluftejektors in einem Rohr mitgerissen wird, wo sie eine aufsteigende Bewegung erfährt und an dessen Auslass die körnige Masse mit Wasser oberhalb der Filtrierschicht gewaschen wird, wonach die körnige Masse schwerkraftsbedingt auf den oberen Teil der Filtrierschicht zurückgeführt wird, dadurch gekennzeichnet, dass die belastete körnige Masse, die dem ersten Waschvorgang unterzogen wurde, durch Druckluft oberhalb der Filtrierschicht fluidisiert und einer Zusatzwäsche mit Druckluft und Druckwasser unterzogen wird.

2. Verfahren nach Anspruch 1, dadurch gekennzeichnet, dass die Druckluft für die Fluidisierung und die Zusatzwäsche der körnige Masse unter einem Druck von 0,1 bis 0,4 bar steht.

3. Verfahren nach einem der vorhergehenden Ansprüche, dadurch gekennzeichnet, dass die erste Wäsche und die Zusatzwäsche der belasteten körnigen Masse intermittierend und synchron durchgeführt wird.

4. Vorrichtung zur Durchführung des Verfahrens nach einem der vorhergehenden Ansprüche, mit einem geschlossenen zylindrisch-konischen Gehäuse (1), einer Filtrierzone mit einer körnigen Filtrierschicht (2), einer Einrichtung zum Einführen des zu behandelnden Fluids in den unteren Teil dieser Filtrierschicht, einer Einrichtung zur Wiedergewinnung des filtrierten Wassers am oberen Teil der Vorrichtung sowie mit einer Waschzone (8), welche oberhalb der Filtrierzone angeordnet ist und in die ein axiales Rohr (5) mündet, welches an seiner Basis mit Druckluft gespeist ist, um belastete Filtriermasse in Richtung auf die Waschzone mitzureissen, und mit einer Einrichtung (10) zum Abführen von Waschwasser von dieser Zone, dadurch gekennzeichnet, dass die Vorrichtung mit einem Druckluftverteiler (11) ausgerüstet ist, welcher oberhalb der körnigen Filtrierschicht (2) angeordnet ist.

5. Vorrichtung nach Anspruch 4, dadurch gekennzeichnet, dass die Vorrichtung ein Druckminderventil und ein Mengenregelventil (13) zur kontinuierlichen oder intermittierenden Speisung des Sammlers (11) mit Luft unter Überdruck aufweist, welches die Einspeisung vorzugsweise synchron mit der Einspeisung von Druckluft vom Ejektor (6) mittels des axialen Rohres (5) zur Wiedergewinnung des belasteten Filtriermaterials sicherstellt.

6. Vorrichtung nach einem der Ansprüche 4 und 5, dadurch gekennzeichnet, dass die Vorrichtung einen Zeitgeber (14) zur Regelung der Waschzyklen in Abhängigkeit von der Verschmutzung der Filtrierschicht aufweist.

## Claims

1. A process for the filtration of an aqueous suspension on a granular filter bed, in which the fluid to be treated passes through the granular mass in an ascending vertical stream, this granular mass being, with a view to its being washed by air and water, continuously entrained by means of a pressurized air ejector into a tube where it assumes an ascending movement and at the outlet of which it is washed with water above the bed where the filtration is effected, whereafter it is recycled by gravity to the upper part of the filtration bed, characterized in that the loaded granular mass, having being subjected to this first washing, is fluidised by the pressurized air above the filter bed and subjected to a complementary washing with water and pressurized air.

2. A process according to claim 1, characterized in that the pressurized air for the fluidising and complementary washing of the granular mass is under a pressure of from 0.1 to 0.4 bar.

3. A process according to any one of the preceding claims, characterized in that the first washing and the complementary washing of the loaded granular mass are effected intermittently and in synchronism.

4. An apparatus for implementing the process according to any one of the preceding claims, comprising, in a closed chamber (1) cylindro-conical in form, a filtration zone on a granular filter bed (2), means (3) for introducing the fluid to be treated into the lower part of this filter bed, means (4) for recovering the filtered water at the upper part of the apparatus, and a washing zone (8) situated above the filtration zone and in which an axial tube (5) opens, supplied at its base with compressed air to entrain the loaded filter mass towards the washing zone, and means (10) for evacuating the washing water from this zone, said apparatus being characterized in that it is provided with a pressurized air distributor (1) arranged above the granular filter bed (2).

5. An apparatus according to claim 4, characterized in that it comprises a pressure reducing valve and a delivery control valve (13) to supply the collector (11) with pressurized air, continuously or intermittently and advantageously in synchronism with the supply of compressed air to the ejector (6) ensuring, by means of the axial tube (5), the recovery of the loaded filter mass.

6. An apparatus according to either one of claims 4 and 5, characterized in that it comprises a timer (14) to regulate the washing cycles, according to the degree of clogging-up of the filter bed.